# DEMANDE DE BREVET EUROPEEN

(11) **EP 1 296 170 A2**
(43) Date de publication de la demande: **26.03.2003**
(21) Numéro de dépôt: 02292184.5
(22) Date de dépôt: 05.09.2002
(51) Int. Cl.: G02B 6/44

(54) **Câble à forte densité de fibres optiques**

(30) Priorité: 20.09.2001 FR 0112158
(71) Demandeur: ALCATEL, 75008 Paris (FR)
(72) Inventeur: Bourget, Vincent, 78160 Marly Le Roi (FR); Kaczmarek, Jean-Marc, 62100 Calais (FR)
(74) Mandataire: Vigand, Régis Louis Michel

(57) **Abrégé**

Le câble comporte une finition (5, 6, 7), d'allure tubulaire, qui enveloppe une pluralité de tubes de protection (1A, 1B), dans lesquels des fibres optiques sont logées par groupes et disposent d'une relative liberté de mouvement. Ces tubes sont disposés par couches au niveau desquelles ils sont disposés en hélice.

Le câble comporte au moins une couche composée d'un assemblage de tubes (1A) qui ont un diamètre extérieur plus petit que celui des tubes (1B) d'une couche qu'ils entourent, les tubes des deux couches contenant tous un même nombre de fibres optiques (2).

## Description

L'invention concerne un câble à fibres optiques à forte densité de fibres, ce câble étant du type qui comporte une finition, d'allure tubulaire, enveloppant une pluralité de tubes de protection où les fibres optiques sont logées par groupes. Elle concerne plus particulièrement un câble comportant un grand nombre de fibres, dans lequel les tubes de protection de fibres sont disposés en couches et en hélice par couche.

Comme il est connu, les câbles à fibres optiques, tels qu'envisagés ci-dessus prévoient classiquement des tubes de protection pour groupe de fibres optiques d'une section transversale légèrement plus grande que celle qui devrait suffire pour loger les fibres d'un groupe de manière à permettre aux fibres de disposer d'une certaine liberté de mouvement dans les tubes, en cas de déformation du câble. Ceci combiné avec un enroulement en hélice des tubes permet de limiter les efforts longitudinaux et en particulier les efforts de traction ou de compression auxquels les fibres optiques d'un câble sont susceptibles d'être soumises, lorsque le câble est enroulé, déroulé et/ou coudé, par exemple lors de son bobinage pour stockage ou lors d'une opération de pose. Il est en effet connu que de telles opérations doivent s'effectuer sans jamais dépasser des limites mécaniques prédéterminées pour un câble de caractéristiques données, vu la relative fragilité des fibres.

Des recherches sont donc actuellement menées dans le domaine des câbles à fibres optiques pour obtenir les plus grandes densités de fibres possibles par câble afin de répondre aux besoins présents et futurs en matière de transmission d'informations par voie optique en utilisant les fibres comme support physique de transmission, tout en respectant les contraintes mécaniques qu'impose l'usage de ces fibres au niveau des câbles, en particulier en phase de pose. Cette pose s'effectuant ordinairement soit en conduite, soit en souterrain, soit encore en galerie technique. Un des axes de recherche est orienté vers une augmentation du nombre de fibres pour un même diamètre extérieur de câble et/ou une réduction du diamètre d'un câble pour loger un nombre de fibres donné.

L'invention propose donc un câble à fibres optiques comportant une finition, d'allure tubulaire, qui enveloppe une pluralité de tubes de protection, disposés par couches et en hélice par couche, où les fibres optiques sont logées et disposent d'une relative liberté de mouvement.

Selon une caractéristique de l'invention, le câble comporte au moins une couche composée d'un assemblage de tubes qui ont un diamètre extérieur plus petit que celui des tubes d'une couche qu'ils entourent, bien que les tubes des deux couches contiennent chacun le même nombre de fibres, de manière à augmenter la capacité du câble et/ou à en limiter le diamètre extérieur par rapport à un câble comportant des couches où les tubes sont d'un même diamètre extérieur.

Selon l'invention, le câble comporte au moins une couche composée d'un assemblage de tubes ayant un diamètre extérieur plus petit que celui des tubes de la couche qu'ils entourent, les rapports entre diamètre interne et pas d'enroulement en hélice pour ces couches étant choisis pour permettre d'obtenir une liberté de mouvement équivalente pour les fibres quelle que soit la couche.

Selon l'invention, un même rapport entre diamètre interne et diamètre externe des tubes protecteurs est choisi pour les tubes des différentes couches.

Selon une forme de mise en oeuvre de l'invention, prévue pour le cas où le câble comporte des fibres ayant des sensibilités différentes aux éventuelles déformations matérielles, les dites fibres sont réparties dans les couches suivant leurs sensibilités, les tubes contenant les fibres plus sensibles formant une ou plusieurs couches entourée(s) par au moins une couche où les tubes contiennent des fibres moins sensibles.

Selon une variante de mise en oeuvre de l'invention, les tubes contenant les fibres sont assemblés de manière régulière pour former des couches jointives entre le gainage et un porteur central autour duquel ces couches sont placées. La couche jouxtant le porteur est composée de tubes d'un même diamètre externe, au moins égal à celui des tubes des autres couches, la couche jouxtant la paroi interne du tube que forme le gainage étant composée de tubes d'un même diamètre externe, plus petit que celui des tubes d'au moins la couche jouxtant le porteur, les nombres respectifs de tubes des différentes couches étant choisis croissants, depuis la couche jouxtant le porteur jusqu'à la couche jouxtant la paroi interne du tube que forme le gainage, pour permettre que chaque couche se présente sous une forme quasiment continue.

L'invention, ses caractéristiques et ses avantages sont précisés dans la description qui suit en liaison avec les figures évoquées ci-dessous.

La figure 1 présente une vue en coupe transversale d'un câble à fibres optiques connu.

La figure 2 présente un détail d'une extrémité partiellement dénudée d'un câble à fibres optiques connu.

La figure 3 présente une vue en coupe transversale d'un câble à fibres optiques, selon l'invention.

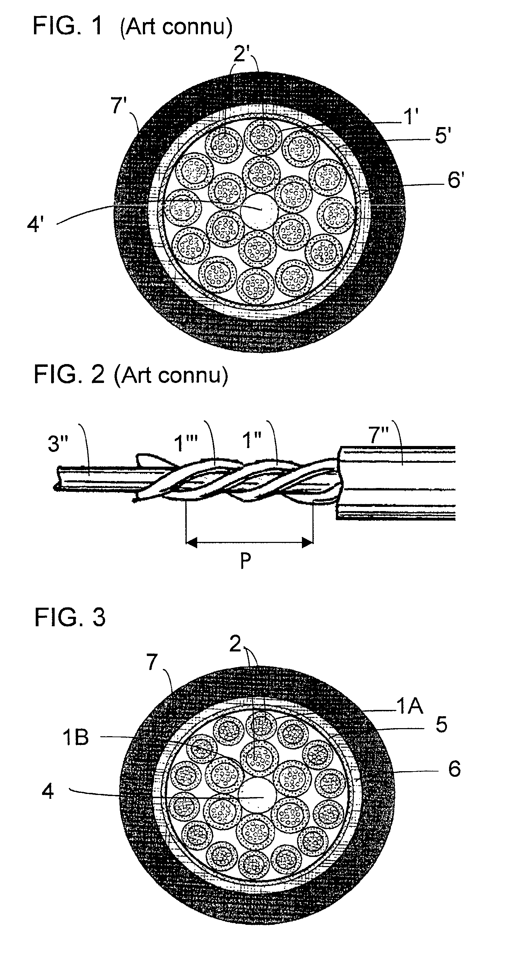

Le câble à fibres optiques connu, dont une coupe transversale est montrée en figure 1, est supposé comporter une finition tubulaire, simple ou composite, enveloppant une pluralité de tubes de protection 1' où des fibres optiques 2' sont logées par groupes d'un même nombre de fibres optiques et par exemple par groupe de douze. Les fibres 2' d'un groupe disposent d'une relative liberté de mouvement dans le tube 1' où elles sont étendues côte à côte, pour la raison mentionnée plus haut. Les tubes 1' ont pour objet de protéger les fibres vis-à-vis des efforts radiaux et longitudinaux auxquels le câble à fibres optiques peut éventuellement être soumis, ils sont classiquement disposés par couches concentriques et en hélice à pas d'enroulement constant ou alterné, ces couches étant au nombre de deux dans l'exemple proposé. De manière habituelle, les tubes ont les mêmes diamètres, s'ils contiennent tous un même nombre de fibres ; leur diamètre extérieur est par exemple de 2,5 mm pour des tubes recevant douze fibres optiques en verre. Un même pas d'enroulement hélicoïdal P est classiquement prévu pour les tubes de protection d'une couche, comme montré en figure 2 sur un exemple théorique de câble comportant une couche de tubes représentés par deux d'entre eux 1" et 1"'. Ces tubes sont supposés enroulés avec un pas d'enroulement en hélice P autour d'un porteur central 3" du câble et à l'intérieur d'une finition tubulaire protectrice 7".

Comme connu, le câble illustré en figure 1, comporte des éléments de renfort mécanique prévus pour empêcher que des efforts trop importants puissent être appliqués aux fibres, en particulier en traction ou en flexion lors de la pose du câble.

Dans l'exemple proposé en liaison avec la figure 1, le câble comporte un porteur 4' qui est plus particulièrement prévu pour être soumis aux efforts longitudinaux appliqués au câble. Une structure de renfort 6' est incluse dans la finition où elle est par exemple située entre un rubannage d'étanchéité 5', à l'intérieur duquel sont logés le porteur 4', les tubes de protection 1', prévus pour les fibres optiques 2', et une gaine de protection extérieure 7'.

Une telle finition de câble, - associant un porteur central 4 et un ensemble incluant une structure de renfort 6, un rubannage d'étanchéité 5 et une gaine de protection extérieure 7 -, est également représentée sur la figure 3 relative à un câble selon l'invention. Une telle architecture n'est donnée qu'à titre d'exemple et ne doit pas être considérée comme limitative.

La finition tubulaire du câble, présentée en figure 3 et supposée constituée par les éléments 5, 6 et 7, peut être réalisée de différentes manières et sous différentes formes. Le porteur 4 peut être réalisé en résine renforcée de fibres de verre, en métal ou en tout autre matériau adapté. La structure de renfort 6 peut notamment être réalisée sous la forme de mèches en fibres de carbone. Le rubannage d'étanchéité 5 est utilisé pour entourer les tubes où sont logées les fibres optiques 2 que comporte le câble et il sépare ces tubes de la structure de renfort 6. La gaine de protection extérieure 7 est par exemple réalisée à l'aide d'un matériau extrudable tel qu'une résine fluorée, une polyoléfine, un compound, etc.

Selon l'invention il est prévu au moins deux couches de tubes autour du porteur 4 et à l'intérieur de l'enrubannage d'étanchéité 5, comme schématisé à titre d'exemple sur la figure 3.

Les tubes des couches logent préférablement tous le même nombre de fibres optiques 2. Selon l'invention, il est prévu qu'au moins une couche soit composée par un assemblage de tubes qui ont tous un diamètre extérieur plus petit que celui des tubes de la couche qu'ils entourent, tels les tubes de la couche comprenant le tube 1A par rapport aux tubes de la couche comprenant le tube 1B.

Dans l'exemple de réalisation proposé, les tubes de la couche intérieure incluant le tube 1B ont par exemple un diamètre extérieur de 2, 5 mm, alors que les tubes de la couche extérieure incluant le tube 1A ont un diamètre extérieur de 2 mm. Si, comme présenté, les six tubes de la couche intérieure du câble illustré sur la figure 1 et les six tubes de la couche intérieure du câble illustré sur la figure 3 ont même diamètre extérieur et contiennent un même nombre de fibres, il est donc possible de disposer un plus grand nombre de tubes sur la couche extérieure du câble illustré sur la figure 3 que sur celle du câble présenté sur la figure 1. Cette augmentation correspond à l'ajout de deux tubes contenant chacun douze fibres en couche extérieure dans l'exemple présenté où elle implique une diminution du diamètre intérieur des tubes de la couche extérieure par rapport à celui de la couche intérieure. Une diminution du diamètre de l'enveloppe externe de la couche extérieure qui correspond pratiquement à la face interne du rubannage d'étanchéité 5, peut donc être obtenue comme montré sur la figure 3. Cette diminution est ici associée à une augmentation de la densité du câble en fibres optiques et donc de sa capacité en matière de transmission. Elle peut également être exploitée pour réduire le diamètre extérieur du câble ou plus précisément de sa gaine de protection extérieure 7 par rapport à celui d'un câble selon la technique antérieure tel qu'illustré sur la figure 1. Il est bien entendu envisageable de conserver un même diamètre extérieur de câble et de prévoir la mise en place d'un plus grand nombre de tubes et donc de fibres optiques sur différentes couches.

Selon une forme particulière de mise en oeuvre de l'invention, les tubes, tels 1A et 1B, qui sont répartis sur les couches sont réalisés de manière à avoir un même rapport entre diamètre intérieur et diamètre extérieur, étant rappelé qu'il est prévu que les tubes d'une couche aient même diamètre extérieur et donc même diamètre intérieur. Le fait que les tubes d'une couche, enveloppée par une autre couche puissent avoir un diamètre intérieur plus grand que celui des tubes de ladite autre couche se traduit donc par une diminution de liberté de mouvement pour les fibres contenues dans les tubes de la couche enveloppante par rapport à celle obtenue pour les fibres contenues dans les tubes de la couche enveloppée, lorsque les fibres ont même diamètre extérieur dans tous les tubes. Pour compenser cette diminution de liberté de mouvement pour les fibres contenues dans les tubes d'une couche enveloppante par rapport à celle obtenue pour les fibres contenues dans les tubes, de diamètre intérieur plus grand, d'une couche enveloppée, il est donc prévu un pas d'enroulement hélicoïdal P, au moins égal et préférablement plus grand pour les tubes de la couche enveloppante que pour ceux de la couche enveloppée. Les pas d'enroulement respectifs sont déterminés de manière connue de l'homme de métier en fonction des caractéristiques des couches de tubes pour qu'une liberté de mouvement équivalente soit obtenue pour les fibres optiques au niveau des différentes couches de tubes du câble.

Selon une autre forme particulière de mise en oeuvre de l'invention, il est possible de réaliser des câbles dans lesquels sont inclus des fibres optiques qui présentent des sensibilités différentes aux éventuelles déformations matérielles qu'elles sont susceptibles d'avoir à supporter, notamment en phase de déroulement et de pose du câble. Ces déformations peuvent particulièrement être occasionnées par le déroulement du câble et par sa pose, en particulier lorsque cette dernière s'effectue par introduction dans une conduite, ou dans une galerie technique, préexistante, ou encore par ensevelissement. Comme il est connu, les déformations intervenant dans ces conditions sont en général plus difficiles à maîtriser que celles supportées par le câble en phase de bobinage, après fabrication.

Selon l'invention, il est donc prévu de répartir les fibres dans les couches en fonction de leur sensibilités respectives, les fibres plus sensibles sont alors logées dans des tubes d'au moins une couche qui est enveloppée par au moins une autre couche de tubes contenant des fibres moins sensibles et donc plus à même de supporter les efforts transmis au câble, en particulier lorsque ce câble est localement soumis à des flexions.

L'exemple de câble présenté sur la figure 3 est plus particulièrement composé à l'aide de tubes de protection, tels 1A et 1B, qui sont assemblés de manière régulière pour former des couches jointives entre le gainage et un porteur 4. Ces couches sont ici montrés au nombre de deux, étant entendu que ce nombre peut éventuellement être augmenté, comme déjà indiqué. La couche jouxtant le porteur 4 est composée de tubes, tel 1B, d'un même diamètre externe, par exemple 2,5 mm, qui est au moins égal à celui des tubes de l'autre ou des autres couches. La couche jouxtant la paroi interne du tube de gainage, soit ici la face interne du rubannage d'étanchéité 5, est composée de tubes d'un même diamètre externe, par exemple 2 mm, qui est plus petit que celui des tubes d'au moins la couche jouxtant le porteur 4. Le nombre de tubes pour chaque couche est choisi pour que la couche soit continue ou quasiment continue. Les diamètres internes des tubes et les pas d'enroulement en hélice simple ou alternée de ces tubes par couches sont tels que les fibres optiques disposent pratiquement d'une liberté de mouvement équivalente quel que soit la couche où elles sont situées.

## Revendications

1. Câble à fibres optiques comportant une finition (5, 6, 7), d'allure tubulaire, qui enveloppe une pluralité de tubes de protection (1A 1B), disposés par couches et en hélice par couche, dans lesquels les fibres optiques sont logées par groupes et où elles disposent d'une relative liberté de mouvement, ledit câble étant **caractérisé en ce qu'**il comporte au moins une couche composée d'un assemblage de tubes (1A) qui ont un diamètre extérieur plus petit que celui des tubes (1B) d'une couche qu'ils entourent, alors que les tubes des deux couches contiennent tous un même nombre de fibres optiques (2).

2. Câble à fibres optiques, selon la revendication 1, dans lequel le câble comporte au moins une couche composée d'un assemblage de tubes ayant un diamètre extérieur plus petit que celui des tubes de la couche qu'ils entourent, les rapports entre diamètre interne et pas d'enroulement des tubes pour ces couches étant choisis pour permettre d'obtenir une liberté de mouvement équivalente pour les fibres, quelle que soit la couche.

3. Câble à fibres optiques, selon la revendication 2, dans lequel un même rapport entre diamètre interne et diamètre externe des tubes protecteurs est choisi pour les tubes des différentes couches.

4. Câble à fibres optiques, selon l'une des revendications 1 à 3, **caractérisé en ce qu'**il comporte des fibres qui sont réparties dans les couches suivant leurs sensibilités, les tubes contenant les fibres plus sensibles formant une couche ou plusieurs couches entourée(s) par au moins une couche où les tubes contiennent des fibres moins sensibles.

5. Câble à fibres optiques, selon l'une des revendications 1 à 4, dans lequel les tubes contenant les fibres sont assemblés de manière régulière pour former des couches jointives entre le gainage et un porteur central (4) autour duquel ces couches sont placées, la couche jouxtant le porteur étant composée de tubes d'un même diamètre externe au moins égal à celui des tubes des autres couches, la couche jouxtant la paroi interne du tube que forme le gainage étant composé de tubes d'un même diamètre externe plus petit que celui des tubes d'au moins la couche jouxtant le porteur, les nombres respectifs de tubes des différentes couches étant choisis croissants depuis la couche jouxtant le porteur jusqu'à la couche jouxtant la paroi interne du tube que forme le gainage pour permettre que chaque couche se présente sous une forme continue ou quasiment continue.
